# EUROPÄISCHE PATENTANMELDUNG

(11) **EP 4 137 657 A1**
(43) Veröffentlichungstag der Anmeldung: **22.02.2023**
(21) Anmeldenummer: 22187519.8
(22) Anmeldetag: 28.07.2022
(51) Int. Cl.: E04H 12/22

(54) **ZAUNPFAHL SOWIE WEIDEZAUNSYSTEM**

(30) Priorität: 16.08.2021 DE 202021104362 U
(71) Anmelder: Müller, Alois, 83700 Rottach-Egern (DE)
(72) Erfinder: Müller, Alois, 83700 Rottach-Egern (DE)
(74) Vertreter: FDST Patentanwälte

(57) **Zusammenfassung**

Die Erfindung betrifft einen Zaunpfahl für einen insbesondere elektrischen Weidezaun mit einem Bodenanker sowie mit einem Pfosten, welcher mit dem Bodenanker reversibel verbindbar ist, wobei eine zusätzliche Verbindungshülse vorgesehen ist, welche einerseits über den Bodenanker stülpbar ist und in die andererseits der Pfosten eingesteckt ist. Die Erfindung betrifft weiterhin ein Weidezaunsystem mit einer Vielzahl derartiger Zaunpfähle.

## Beschreibung

Die Erfindung betrifft einen Zaunpfahl sowie ein Weidezaunsystem mit einer Vielzahl von solchen Zaunpfählen.

Weidezäune insbesondere in alpinen Regionen sind hohen jahreszeitlichen Belastungen ausgesetzt. Durch die teilweise sehr steilen Hänge und durch Schneelasten im Winter können auf Weidezäune, speziell auf deren Zaunpfähle erhebliche Belastungen einwirken. Üblicherweise werden daher in derartigen alpinen Regionen Weidezäune im Frühjahr aufgebaut und im Herbst wieder abgebaut. Der hierfür erforderliche Aufwand ist dabei groß.

Grundsätzlich gibt es mobile Weidezaunsysteme mit Zaunpfosten, welche vergleichsweise einfach in den Boden einsteckbar sind. Derartige Systeme sind jedoch häufig wenig robust und erfordern zudem einen hohen Aufwand, alle Jahre wieder die Zaunpfähle im Boden zu verankern.

Ein mobiles Systems beispielsweise aus der DE 20 2006 017 436 U1 zu entnehmen. Dieses weist ein Verankerungselement auf, welches eine Trittfläche mit zwei nach unten abstehende Nägel umfasst. Das Verankerungselement umfasst weiterhin eine Trittfläche zum Einpressen des Verankerungselements in den Boden sowie eine Hülse, in die ein Pfosten eingesteckt werden kann, welcher durch einen Bolzen gesichert werden kann. Ein derartiges mobiles System ist für eine alpine Umgebung jedoch wenig robust.

Ausgehend hiervon liegt der Erfindung die Aufgabe zugrunde, einen Zaunpfahl sowie ein Weidezaunsystem anzugeben, welches sich durch einen einfachen Auf- und Abbau auszeichnet und welches auch bei widrigen alpinen Umgebungsbedingungen eingesetzt werden kann.

Die Aufgabe wird gemäß der Erfindung gelöst durch einen Zaunpfahl mit den Merkmalen des Anspruchs 1 oder 14 sowie durch ein Weidezaunsystem mit solchen Zaunpfählen.

Der Zaunpfahl umfasst dabei einen Bodenanker sowie einen Pfosten, welcher mit dem Bodenanker reversibel verbindbar ist. Weiterhin ist eine zusätzliche Verbindungshülse vorgesehen, welche einerseits mit dem Bodenanker zu verbinden ist und in die andererseits der Pfosten eingesteckt ist. Die Verbindungshülse ist dabei vorzugsweise reversibel und werkzeuglos mit dem Bodenanker verbindbar. Bevorzugt bilden die Verbindungshülse und der Pfosten eine Pfosteneinheit, welche also mit dem Bodenanker reversibel verbunden werden kann. Unter reversibel verbinden wird allgemein verstanden, dass eine wiederholte Montage und Demontage am Bodenanker ermöglicht ist.

Der erfindungsgemäße Zaunpfahl ist daher insgesamt zumindest dreiteilig ausgebildet, wobei die drei Teile der Bodenanker, die Verbindungshülse sowie der Pfosten sind. Dabei bilden Pfosten und Verbindungshülse vorzugsweise eine fest verbundene Baueinheit aus.

Das hier beschriebene Zaunpfahlsystem beruht dabei auf der Überlegung, den robust ausgebildeten Bodenanker dauerhaft im Boden zu verankern. An diesem dauerhaft verankerten Bodenanker wird dann der Pfosten über die Verbindungshülse bei Bedarf befestigt oder wieder entfernt. Hervorzuheben ist hierbei, dass die Verbindungshülse über den Bodenanker gestülpt wird. Der Bodenanker weist daher ein oberes, insbesondere zylindrisches Endstück auf, über das die Verbindungshülse gestülpt wird. Durch das Überstülpen der Verbindungshülse über den Bodenanker ist das Verbindungssystem insgesamt wenig schmutzempfindlich und im Vergleich zu einer bodenseitigen Hülse, in die der Pfosten eingesteckt werden muss. Durch die Verbindungshülse, in die auf der einen Seite der Bodenanker und auf der anderen Seite der Pfosten eingesteckt ist, ist der gesamt Zaunpfahl sehr robust.

Sowohl der Bodenanker als auch die Verbindungshülse sind dabei vorzugsweise aus Metall, insbesondere Stahl, speziell aus verzinktem Stahl.

Für eine einfache, werkzeuglose Verbindung ist die Verbindungshülse bevorzugt über eine Bajonett-Verbindung mit dem Bodenanker verbindbar. Hierdurch ist eine einfache Montage und Demontage ermöglicht und zugleich ist eine robuste Verbindung erzielt.

Wie bereits erwähnt, bildet der Pfosten mit der Verbindungshülse vorzugsweise eine Pfosteneinheit, die insgesamt mit dem Bodenanker reversibel verbindbar ist. Diese Pfosteneinheit wird in einfacher Weise über die zuvor beschriebene Bajonettverbindung oder eine sonstige einfache werkzeuglose Verbindung am Bodenanker befestigt.

Allgemein weist der Bodenanker in bevorzugter Ausgestaltung eine bodenseitige Spitze sowie ein sich daran anschließendes, insbesondere zylindrisches Endstück auf, auf das die Verbindungshülse aufsetzbar ist. Die Spitze wird beispielsweise gebildet durch ein im Querschnitt T- oder auch X-förmiges Profil, welches endseitig spitz zuläuft. An dieses Profil schließt sich das insbesondere zylindrisches Endstück an, auf das die Verbindungshülse aufgesetzt ist. Das zylindrische Endstück ist speziell als ein zylindrisches Rohr ausgebildet. Das Endstück erstreckt sich dabei typischerweise über eine Länge im Bereich von beispielsweise 10-30 cm insbesondere über etwa 15 cm. Im verankerten Zustand ragt das Endstück aus dem Boden hervor, sodass die Verbindungshülse auf das Endstück aufgestülpt werden kann.

Zur Ausbildung des Bajonettverschlusses weist das Endstück vorzugsweise einen querverlaufenden Bolzen auf, welcher randseitig zu zumindest einer Seite übersteht und insbesondere einen verbreiterten Kopf aufweist. Diese Querbolzen ist beispielsweise als eine Schraube ausgebildet.

Zur Ausbildung der Bajonett-Verbindung ist in der Verbindungshülse zumindest eine geeignete Ausnehmung ausgebildet.

In zweckdienlicher Ausbildung ist der Pfosten mit der Verbindungshülse unlösbar verbunden, speziell über eine Pressverbindung. Der Pfosten ist also in die Verbindungshülse eingepresst.

Der Pfosten ist bevorzugt insgesamt einteilig ausgebildet, d. h. es handelt sich um eine monolithischen Pfosten.

Bevorzugt besteht der Pfosten aus einem nicht leitenden Material besondere aus Kunststoff. Bevorzugt besteht er aus einem recyceltem Kunststoff. Speziell handelt es sich bei dem Pfosten um einen Stab aus Vollmaterial.

Beim fertigen Weidezaun ist grundsätzlich noch ein Zaunband gespannt, welches beispielsweise als Seil, als eigentliches Band oder auch als ein Netz ausgebildet ist. Dieses Zaunband wird an den einzelnen Zaunpfählen befestigt. Typischerweise sind auf unterschiedlichen Höhen mehrere derartiger Zaunbänder befestigt. Diese Zaunbänder sind dabei üblicherweise elektrisch leitfähig, sodass ein elektrischer Weidezaun ausgebildet ist.

In bevorzugter Ausgestaltung sind zur Führung eines solchen Zaunbandes am Pfosten Federklemmen angeordnet, die frei verstellbar am Pfosten befestigt sind. Durch die freie Verstellbarkeit kann problemlos eine Höheneinstellung vorgenommen werden, sodass auch bei unwegsamen Gelände bzw. bei steilen Hängen problemlos die gewünschte Höhe für den Verlauf des Zaunbandes eingestellt werden kann.

Bei den Federklemmen handelt sich dabei insbesondere um Klemmen aus einem leitfähigen Material sodass also auch über die Federklemmen bei Bedarf ein Strom fließen kann. Diese Ausgestaltung der Federklemme in Kombination mit dem Pfosten aus dem nicht leitenden Material bildet eine eigene Erfindung, wie sie im Anspruch 9 beansprucht ist. Diese Ausgestaltung lässt sich mit der speziellen drei-teiligen Ausgestaltung des Zaunpfahls in beliebiger Weise kombinieren.

Unter Federklemme wird allgemein verstanden, dass die Federklemme durch Federkraft am Pfosten reversibel befestigbar und lösbar ist, sodass sie ohne weiteres an unterschiedlichen Höhen befestigt werden kann. Speziell umschlingt die Federklemme mit einem zylindrischen Teilstück, welches insbesondere als Schraubenfederteil ausgebildet ist, den Pfosten.

Die Federklemme ist in bevorzugter Ausgestaltung nach Art einer Schenkelfeder ausgebildet, mit dem zylindrischen Schraubenfederteil und zwei endseitigen Federschenkeln, die nach außen abstehende, gebogene Enden aufweisen. An diesen gebogenen Enden können die Federschenkel mit der Hand gegriffen werden. Die beiden Federschenkeln und die Enden sind gegenüberliegend und gegenläufig angeordnet, und zwar derart, dass bei einem Zusammendrücken der beiden Enden der zylindrische Schraubenfederteil quasi entspannt wird und damit der Innendurchmesser des Schraubenfederteils sich etwas erweitert, wodurch eine Verstellung am Pfosten entlang möglich ist. Der Innendurchmesser des Schraubenfederteils ist an den Durchmesser des Pfostens angepasst, und zwar derart, dass im Normalfall, wenn also die beiden Enden nicht zusammengedrückt werden, der zylindrische Schraubenfederteil am Pfosten durch seine Federkraft geklemmt ist. Umgekehrt ist bei zusammengedrückten Enden die Klemmkraft soweit reduziert und der Innendurchmesser soweit aufgeweitet, dass die Federklemme entlang des Pfostens verschiebbar ist. Insgesamt ist daher die Federklemme mit dem zylindrischen Teil über den Pfosten gestülpt.

Die beiden Enden sind bevorzugt nach Art von Haken für die Führung des Zaunbandes ausgebildet. Das Zaunband lässt sich daher einfach durch Einhaken in diese Enden am Zaunpfahl befestigen. Bevorzugt sind die Haken gegenseitig offen, sodass ein versehentliches Herausgleiten des Zaunbandes aus diesen Haken vermieden ist. Speziell sind die Haken U-förmig ausgebildet, wobei die Öffnung einmal nach oben und einmal nach unten orientiert ist.

In einer Variante ist der Pfosten als ein Abspannpfosten ausgebildet mit einem oberen Ende, auf dem eine Abspannhülse aufgesetzt ist. Diese weist dabei Abspannelemente für die Befestigung eines Abspannseiles auf, die beispielsweise als Abspannösen oder auch Abspannhacken ausgebildet sind. Dadurch werden endseitige Pfosten zuverlässig befestigt. Das Abspannseil wird beispielsweise an geeigneten Bodenanker befestigt.

Alternativ oder auch ergänzend ist der Pfosten als ein Torpfosten ausgebildet, der zur Befestigung eines Weidezauntores, speziell eines selbstschließenden (Klapp-) Tores ausgebildet ist. Hierzu sind am Pfosten Befestigungselemente, insbesondere über den Pfosten gestülpte Befestigungshülsen vorgesehen, an denen das Weidezauntor befestigt werden kann. Die Befestigungshülsen weisen vorzugsweise daran insbesondere durch Schweißen befestigte Befestigungsplatten auf. An diesen lässt sich das Weidezauntor dann ohne weiteres mit am (vorgefertigten) Weidezauntor vorbereiteten Befestigungsplatten beispielsweise über Schraubverbindungen befestigen. Derartige Weidezauntore werden auch als Peitschen bezeichnet, da sie typischerweise durch Federkraft automatisch schließend ausgebildet sind.

Wie bereits einleitend erläutert, dient das hier beschriebene Weidezaunsystem zum wiederholten Auf- und Abbau, indem die Pfosteneinheit in einfacher Weise von dem jeweiligen Bodenanker abgenommen wird. Dies erfolgt durch einfache Handgriffe, im Falle der Bajonettverbindung durch eine einfache Dreh- und Hubbewegung. Umgekehrt sind bei einem Aufbau ebenfalls nur wenige Handgriffe erforderlich.

Das erfindungsgemäße Weidezaunsystem umfasst zumindest Bodenanker, Verbindungshülsen sowie Pfosten. Ergänzend ist als weiteres Zubehör ein oder mehrere der zuvor beschriebenen Komponenten, wie Federklemme, Abspannhülse und Befestigungshülsen vorgesehen.

Um speziell in touristisch frequentierten Gebieten eine Verletzungsgefahr durch die hervorstehenden Endstück der Bodenanker zu vermeiden, umfasst das Weidezaunsystem weiterhin für einen jeweiligen Bodenanker eine Schutzkappe, welche über das hervorstehende Endstück des Bodenankers gestülpt werden kann.

Diese Schutzkappe ist dabei insbesondere abgerundete ausgebildet, um scharfkantige Ecken zu vermeiden. Sie kann dabei als ein Metallhaube oder auch als eine Kunststoffhaube ausgebildet sein. Sie kann eine Signalfarbe aufweisen oder auch beliebige andere Optiken aufweisen, wie beispielsweise eine Steinoptik.

In bevorzugter Weiterbildung sind Befestigungshülsen vorgesehen, die die über einen jeweiligen Pfosten geführt werden können, und die zur Befestigung von weiteren Elementen dienen.

Die Befestigungshülsen weisen vorzugsweise ein Fixier- oder Klemmelement auf, insbesondere eine Schraube, zur Fixierung der Befestigungshülse an einer gewünschten Position.

Bevorzugt ist an der Befestigungshülse ein quer abstehendes Befestigungselement angeordnet ist, welches zur Befestigung einer Strebe, beispielsweise einer Querstrebe oder einer Stützstrebe dient.

Insbesondere ist das Befestigungselement für eine schwenkbare Befestigung der Strebe ausgebildet.

Ein Ausführungsbeispiel ist nachfolgend anhand der Figuren näher erläutert. Diese zeigen:
- FIG 1: eine Pfosteneinheit mit Pfosten und Verbindungshülse sowie einen Bodenanker,
- FIG 2: eine ausschnittsweise Darstellung eines Pfostens mit daran befestigter Federklemme einer,
- FIG 3: eine Weideschranke,
- FIG 4: einen Zaunpfahl mit einer Stützstrebe,
- FIG 5: eine Schutzkappe,
- FIG 6: eine Adapterplatte für ein Weidentor sowie
- FIG 7: einen Stromschalter

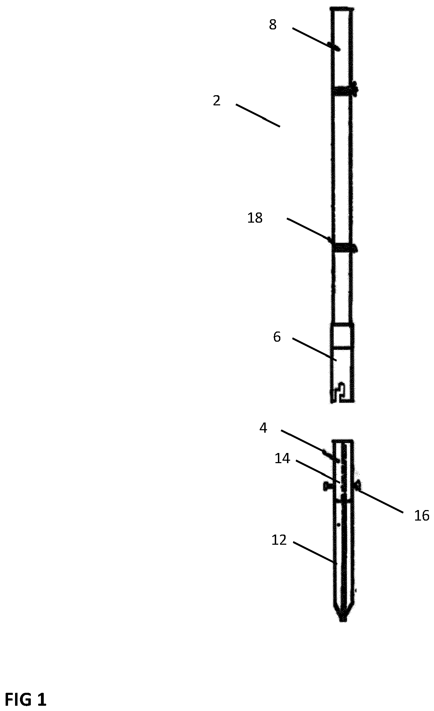

Der Zaunpfahl 2 gemäß Figur 1 weist einen Bodenanker 4, eine Verbindungshülse 6 sowie einen Pfosten 8 auf. Der Bodenanker 4 sowie die Verbindungshülse 6 bestehen aus Stahl. Der Pfosten 8 besteht aus Kunststoff und ist als ein massiver Stab ausgebildet. Die Länge des Bodenankers 4 liegt typischerweise in einem Bereich zwischen 25 cm und 50 cm, bevorzugt sind für unterschiedliche Einsatzgebiete unterschiedliche Längen vorgesehen, beispielsweise eine Länge im Bereich von 25-35 cm sowie eine Länge im Bereich von 40-50 cm.

Der Durchmesser des Pfostens 8 liegt typischerweise im Bereich von einigen Zentimetern, Beispiel weisen im Bereich zwischen 3 cm und 8 cm, speziell zwischen 4 cm und 6 cm. Die Länge der Verbindungshülse 6 liegt bevorzugt im Bereich zwischen 15 cm und 30 cm, beispielsweise bei 20 cm. Bei den hier genannten Dimensionen handelt sich um bevorzugte Dimensionen.

Der Pfosten 8 ist mit der Verbindungshülse 6 fest verbunden, insbesondere ist er in diese eingepresst. Die Verbindungshülse 6 sowie der Pfosten 8 bilden daher eine Pfosteneinheit. Diese lässt sich an dem Bodenanker 4 wiederholt montieren bzw. demontieren. Hierzu ist im Ausführungsbeispiel eine Bajonett-Verbindung vorgesehen. Die Verbindungshülse 6 weist hierzu an ihrem unteren Ende zumindest an einer Seite eine geeignet ausgebildete Ausnehmung 10 auf. Diese ist im Ausführungsbeispiel gebildet durch einen zur Stirnseite hin offenen, ersten Vertikalabschnitt, an den sich ein Horizontalabschnitt anschließt, welcher schließlich wiederum in einen Vertikalabschnitt mündet. Andere Ausführungsvarianten sind für die angedachte formschlüssige Verbindung grundsätzlich auch möglich.

Der Bodenanker 4 weist eine bodenseitige Spitze 12 sowie ein sich daran anschließendes zylindrisches Endstück 14 auf, welches als ein Rohr ausgebildet ist. Die Gesamtlänge des Bodenankers 4 teilt sich auf das (kürzere) zylindrische Endstück 14 und der (längeren) Spitze 12 etwa im Verhältnis 1/3 zu 2/3 bis zum Verhältnis 1/2 zu 1/2 auf.

Im unteren, zur Spitze 12 hin orientiertem Bereich des zylindrischen Endstücks 14 ist ein Querbolzen 16, speziell eine Schraube angeordnet. Diese dient zum Eingriff in die Ausnehmung 10 zur Ausbildung des Verschlusses mit der Verbindungshülse 6.

Zur Montage und Demontage wird die Pfosteneinheit mit der Verbindungshülse 6 auf das Endstück 14 aufgeschoben und über den Bajonettverschluss mit dem Bodenanker 4 verbunden. Zur Demontage bedarf es in umgekehrter Reihenfolge lediglich einer Dreh- und Hubbewegung.

Für den Aufbau eines kompletten Weidezauns ist daher nur eine einmalige Verankerung einer Vielzahl der Bodenanker 4 im Boden erforderlich. Hierzu wird der Bodenanker mit der Spitze 12 voraus in den Boden mit einem geeigneten Werkzeug eingetrieben. Das Endstück 14 steht über der Oberfläche hervor. Auf dieses werden dann die Pfosteneinheiten aufgestülpt.

Bei Weidezäunen werden zwischen den einzelnen Pfosten 8 Zaunbänder entlang geführt, die bei einem elektrischen Weidezaun elektrisch leitend sind. Typischerweise werden dabei auf mehreren unterschiedlichen Höhen mehrere Zaunbänder geführt.

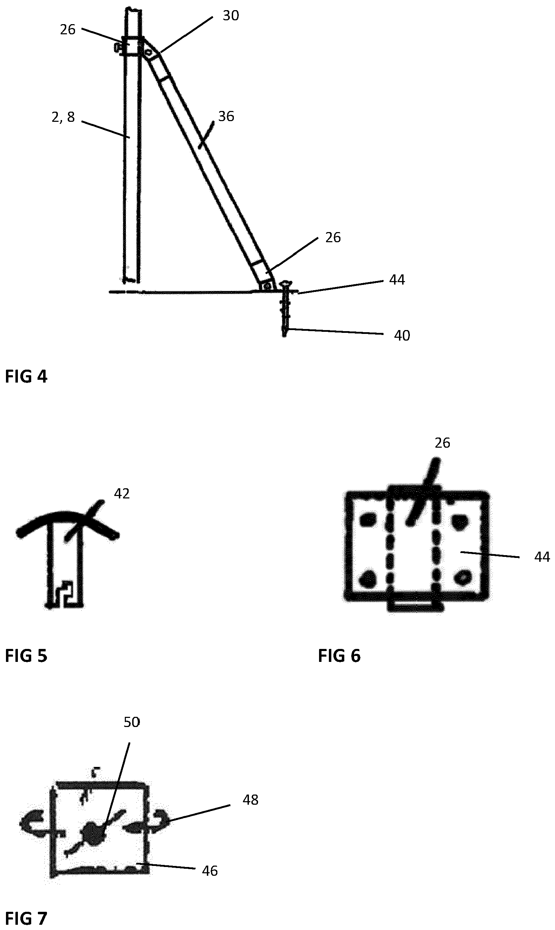

Hierfür sind an einem jeweiligen Pfosten 8 jeweils an den gewünschten Höhen Federklemmen 18 angebracht, wie sie beispielhaft in Figur 4 dargestellt ist.

Bei diesen Federklemmen 18 handelt sich speziell um nach Art von Schenkelfedern ausgebildete Federn, welche ein zylindrisches Schraubenfederteil 20 aufweist, dessen Durchmesser an den Durchmesser des Pfostens 8 angepasst ist. Endseitig stehen 2 Federschenkel mit U-förmig gebogenen Haken 22 hervor. Diese beiden Haken 22 lassen sich zusammendrücken, sodass die Federschenkeln gegenläufig bewegt werden und dadurch der Schraubenfederteil 20 aufgeweitet wird, sodass sich die Federklemme 18 insgesamt entlang des Pfostens 8 an eine gewünschte Position verschieben lässt.

Die Haken 22 dienen zum einen als Bedienelement für das Zusammendrücken der Federklemme 18 und zugleich auch zum Führen des Zaunbandes. Dieses ist typischerweise nach Art eines Seiles oder einer Schnur oder auch eines Drahtes ausgebildet. Für eine sichere Führung sind die beiden Haken 22 gegensinnig orientiert, speziell ist also vorgesehen, dass das die beiden Haken einmal nach unten und einmal nach oben geöffnet sind.

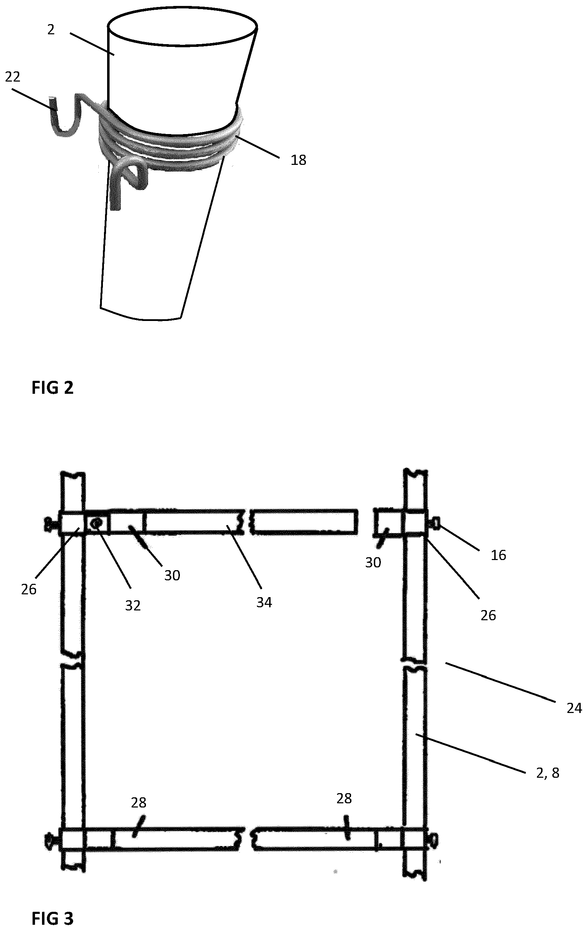

Die FIG 3 bis FIG 7 zeigen weitere Elemente und Komponenten des Weidezaunsystems.

Gemäß FIG 3 ist eine sogenannte Weideschranke 24 vorgesehen, die beispielsweise bei Wanderwegen eingesetzt wird. Zwischen zwei Zaunpfählen sind Querstreben angeordnet. Die Querstreben sind dabei jeweils mittels Befestigungshülsen 26 gehalten. Diese Befestigungshülsen 26 werden über einen jeweiligen Pfosten 8 geführt und mittels einer Schraube 16 an einer gewünschten Höhenposition fixiert. Die Befestigungshülse 26 weist hierzu ein quer abstehendes Befestigungselement 30 auf, an dem die jeweilige Querstrebe in geeigneter Weise befestigt ist.

Typischerweise ist eine untere Querstrebe als ein Überstieg 28 ausgebildet, der beidseitig über jeweils eine Befestigungshülse 26 gehalten ist. Die beiden Enden des Überstiegs 28 sind insbesondere fest mit dem jeweiligen Befestigungselement 30 verbunden, beispielsweise verschraubt und/ oder in dieses beispielsweise als Hülse ausgebildete Element eingesteckt.

Die obere Querstrebe ist typischerweise schwenkbar befestigt. Hierzu ist die obere Querstrebe 34 an dem einen Befestigungselement 30 z.B. mittels eines Drehbolzens 32 drehbar gelagert. Am gegenüberliegenden Befestigungselement 30, welches z.B. als Auflage oder U-förmig ausgebildet ist, liegt die obere Querstrebe 34 auf.

Die Befestigungshülsen 26 werden für unterschiedliche zusätzliche Komponenten verwendet und sind teilweise für diese Komponenten geeignet angepasst. Insgesamt ist ein modulares System geschaffen, bei dem über die Befestigungshülsen 26 unterschiedliche Komponenten mit in den Weidezaun integriert werden können.

In Fig. 4 ist ein Abspann- oder Endpfahl gezeigt, bei dem ein normaler Zaunpfahle 2 mittels einer Stützstrebe 36 am Boden abgestützt wird. Die Stütztrebe ist hierbei mit einem Ende mit einer ersten Befestigungshülse 26 am Pfosten 8 und mit ihrem anderen Ende mit einer als Boden-Befestigungshülse ausgebildeten zweiten Befestigungshülse 26 am Boden befestigt.

Die erste Befestigungshülse 26 ist wieder für eine gelenkige / schwenkbare Befestigung der Stützstrebe ausgebildet und entspricht beispielsweise der zu der FIG 3 beschriebenen Befestigungshülse für die schwenkbare Befestigung der oberen Querstrebe 34.

An der zweiten Befestigungshülse 26 ist eine Boden-Befestigungsplatte 38 angebracht, über die eine Befestigung am Boden, beispielsweise mittels eines Bodennagels 40 erfolgen kann. Auch die zweite Befestigungshülse 26 ist für eine schwenkbare Befestigung der Stützstrebe 36 ausgebildet. Durch die beidseitige Schwenkbarkeit ist eine einfache Montage und eine Anpassung an unterschiedliche Geländegegebenheiten möglich.

FIG 5 zeigt eine Schutzkappe 42, die auf einen Bodenanker 4 aufsetzbar ist. Sie ist hülsenförmig ausgebildet und kann insbesondere am Bodenanker - ähnlich oder genauso wie die Pfosteneinheit befestigt werden, insbesondere mittels einer Bajonett-Verbindung.

FIG 6 zeigt eine Befestigungshülse 26 mit einer daran angebrachten, insbesondere angeschweißten Befestigungsplatte 44, die insbesondere zur Befestigung eines Weidentores herangezogen wird. Die Befestigungsplatte 44 weist hierzu mehrere Schraublöcher auf. Die Befestigungsplatte 44 dient daher als eine Adapterplatte.

FIG 7 zeigt einen Stromschalter 46, bei dem allgemein zwei gegenüberliegende, leitende Stromhaken 48 ausgebildet sind, zwischen denen ein Drehelement 50 angeordnet ist, insbesondere ein drehbar gelagerter Bolzen, der die beiden Stromhaken 48 leitend verbindet oder unterbricht. Der Stromschalter 46 ist bevorzugt hülsenförmig ausgebildet und kann über einen Pfosten 8 geführt werden und an einer gewünschten Höhenposition fixiert werden, beispielsweise mittels einer Schraube. Der Stromschalter 46 ist daher ebenfalls nach Art einer Befestigungshülse ausgebildet

Die Streben 32, 34, 36 weisen vorzugsweise den gleichen Durchmesser auf wie die Pfosten 8. Die Befestigungselemente 30 sind insbesondere auch hülsenförmig, so dass die Streben 32, 34, 36 in diese einsteckbar sind. Die Befestigungshülsen 26, die Befestigungselemente 30 und / oder die Befestigungsplatten 38,44 sind bevorzugt aus Metall / Stahl.

Durch den hier beschriebenen Zaunpfahl 2 und den weiteren hier beschriebenen Elementen zur Ausbildung eines gesamten Weidezaunsystems ist insbesondere in hoch beanspruchten Gebieten, speziell im alpinen Bereich eine Lösung bereitgestellt, bei der eine einfacher und zügiger Auf- und Abbau des Weidezauns bei gleichzeitig robuster Ausgestaltung ermöglicht ist.

### Bezugszeichenliste

- 2: Zaunpfahl
- 4: Bodenanker
- 6: Verbindungshülse
- 8: Pfosten
- 10: Ausnehmung
- 12: Spitze
- 14: Endstück
- 16: Querbolzen
- 18: Federklemme
- 20: Schraubenfederteil
- 22: Haken
- 24: Weideschranke
- 26: Befestigungshülse
- 28: Überstieg
- 30: Befestigungselement
- 32: Drehbolzen
- 34: obere Querstrebe
- 36: Stützstrebe
- 38: Boden-Befestigungsplatte
- 40: Bodennagel
- 42: Schutzkappe
- 44: Befestigungsplatte
- 46: Stromschalter
- 48: Stromhaken
- 50: Drehelement

## Patentansprüche

1. Zaunpfahl für einen insbesondere elektrischen Weidezaun mit einem Bodenanker sowie mit einem Pfosten, welcher mit dem Bodenanker reversibel verbindbar ist, **dadurch gekennzeichnet, dass** eine zusätzliche Verbindungshülse vorgesehen ist, welche einerseits über den Bodenanker stülpbar ist und in die andererseits der Pfosten eingesteckt ist.

2. Zaunpfahl nach dem vorhergehenden Anspruch, **dadurch gekennzeichnet, dass** die Verbindungshülse reversibel und werkzeuglos mit dem Bodenanker verbindbar ist.

3. Zaunpfahl nach einem der vorhergehenden Ansprüche, **dadurch gekennzeichnet, dass** die Verbindungshülse über eine Bajonett-Verbindung mit dem Bodenanker verbindbar ist.

4. Zaunpfahl nach einem der vorhergehenden Ansprüche, **dadurch gekennzeichnet, dass** der Pfosten fest in der Verbindungshülse eingesteckt ist und mit dieser eine Pfosteneinheit bildet, die mit dem Bodenanker reversibel verbindbar ist.

5. Zaunpfahl nach einem der vorhergehenden Ansprüche, **dadurch gekennzeichnet, dass** der Bodenanker eine bodenseitige Spitze sowie ein sich daran anschließendes, insbesondere zylindrisches Endstück aufweist, auf das die Verbindungshülse aufsetzbar ist.

6. Zaunpfahl nach dem vorhergehenden Anspruch, **dadurch gekennzeichnet, dass** im Endstück ein Querbolzen, insbesondere mit einem verbreiterten Kopf angeordnet ist, welcher zur formschlüssigen Verbindung mit der Verbindungshülse seitlich übersteht.

7. Zaunpfahl nach einem der vorhergehenden Ansprüche, **dadurch gekennzeichnet, dass** der Pfosten in die Verbindungshülse eingepresst ist und dass vorzugsweise der Pfosten einteilig ist und / oder aus Kunststoff, insbesondere aus recyceltem Kunststoff besteht.

8. Zaunpfahl nach einem der vorhergehenden Ansprüche, **dadurch gekennzeichnet, dass** zur Führung eines Zaunbandes an dem Pfosten Federklemmen vorgesehen sind, die frei verstellbar am Pfosten befestigbar sind.

9. Zaunpfahl nach dem vorhergehenden Anspruch, **dadurch gekennzeichnet, dass** die Federklemmen nach Art von Schenkelfedern ausgebildet sind mit einem zylindrischen Schraubenfederteil, welcher über den Pfosten gestülpt ist, und mit zwei endseitigen Federschenkeln, die nach außen abstehende, gebogene Enden aufweisen, die handbetätigt entgegen der Federkraft gegeneinander gedrückt werden können, so dass der Schraubenfederteil entspannt und ein Innenradius vergrößert wird, so dass die Federklemme entlang des Pfostens verschiebbar ist.

10. Zaunpfahl nach dem vorhergehenden Anspruch, **dadurch gekennzeichnet, dass** die Enden nach Art von Haken für die Führung des Zaunbandes ausgebildet sind, wobei die Haken bevorzugt gegenseitig offen sind und insbesondere U-förmig ausgebildet sind.

11. Zaunpfahl für einen elektrischen Weidezaun insbesondere nach einem der vorhergehenden Ansprüche, mit einem Bodenanker sowie mit einem Pfosten, **dadurch gekennzeichnet, dass** der Pfosten aus einem nicht leitenden Werkstoff besteht und dass zur Führung eines Zaunbandes an dem Pfosten leitfähige Federklemmen angeordnet sind, die frei verstellbar am Pfosten befestigbar sind.

12. Zaunpfahl nach einem der vorhergehenden Ansprüche, **dadurch gekennzeichnet, dass**
der Pfosten als ein Abspannpfosten oder Endpfosten ausgebildet ist und bei dem
- eine Abspannhülse aufgesetzt ist, die Abspannelemente wie Abspannösen oder Abspannhacken für die Befestigung eines Abspannseiles aufweist
- eine Befestigungshülse fixiert ist, an der eine Stützstrebe befestigt ist,
und / oder dass
der Pfosten als ein Torpfosten ausgebildet ist zur Befestigung eines Weidezauntores, wobei am Pfosten Befestigungselemente, insbesondere über den Pfosten gestülpte Befestigungshülsen mit daran angeordneten Befestigungsplatten angeordnet sind, an denen das Weidezauntor befestigt werden kann.

13. Weidezaunsystem mit einer Vielzahl von Zaunpfählen nach einem der vorhergehenden Ansprüchen, wobei diese bevorzugt ein oder mehrere der nachfolgenden Elemente aufweist
- Schutzkappen für einen jeweiligen Bodenanker, welche über das Ende des Bodenankers stülpbar ist
- Befestigungshülsen, die über einen jeweiligen Pfosten geführt werden können, und die zur Befestigung von weiteren Elementen dienen, wobei die Befestigungshülsen vorzugsweise ein Fixier- oder Klemmelement aufweisen, insbesondere eine Schraube, zur Fixierung der Befestigungshülse an einer gewünschten Position.

14. Weidezaunsystem nach dem vorhergehenden Anspruch, bei dem an der Befestigungshülse entweder
- ein quer abstehendes Befestigungselement angeordnet ist, welches zur Befestigung einer Strebe, beispielsweise einer Querstrebe oder einer Stützstrebe dient, wobei das Befestigungselement insbesondere für eine schwenkbare Befestigung der Strebe ausgebildet ist und / oder
- eine Befestigungsplatte angebracht ist, die zur Befestigung eines Zauntores oder zur Fixierung am Boden dient.

15. Weidenzaunsystem nach einem der Ansprüche 13 oder 14, bei dem ein Stromschalter vorgesehen ist, welcher eine Schalterhülse aufweist, die über einen Pfosten stülpbar ist, wobei beidseitig jeweils ein Stromhaken zum Einhaken eines Zaunbandes angeordnet sind und die beiden Haken über ein Drehschaltelemente elektrisch leitend verbunden oder getrennt werden können.
